# EUROPEAN PATENT APPLICATION

(11) **EP 4 067 627 A1**
(43) Date of publication of application: **05.10.2022**
(21) Application number: 22159953.3
(22) Date of filing: 03.03.2022
(51) Int. Cl.: F01D 25/14, F01D 25/12, F01D 25/24, F01D 9/06, F02C 6/08

(54) **FLOW DIVERTER FOR MID-TURBINE FRAME COOLING AIR DELIVERY**

(30) Priority: 31.03.2021 US 202117218352
(71) Applicant: Raytheon Technologies Corporation, Farmington, CT 06032 (US)
(72) Inventor: YAZICI, Murat, Glastonbury, 06033 (US); HOWLETT, Matthew J., North Haven, 06473 (US)
(74) Representative: Dehns

(57) **Abstract**

Gas turbine engines (300) are described. The engines include high (302) and low pressure turbine systems (306), a mid-turbine frame system (304) arranged axially between the high (302) and low pressure turbine systems (306), and a cooling air conduit (310) fluidly connected to the mid-turbine frame system (304). A flow diverter assembly (400; 500; 600) is installed between the cooling air conduit (310) and the mid-turbine frame system (304). The flow diverter assembly (400; 500; 600) includes a mounting plate (404; 504; 608) to mount to the mid-turbine frame system (304), a manifold (402; 502; 604) defining a manifold cavity (414) on a first side of the mounting plate (404; 504; 608), a conduit connector (408; 508; 612) for connecting to the cooling air conduit (310), and a diverter body (406; 506; 610) extending from a second side of the mounting plate (404; 504; 608) opposite the manifold (402; 502; 604). The diverter body (406; 506; 610) has a solid base and a plurality of apertures (418) arranged about a circumference thereof. The manifold cavity (414) is fluidly connected to an interior of the diverter body (406; 506; 610) through an aperture (412) formed in the mounting plate (404; 504; 608).

## Description

The subject matter disclosed herein generally relates to gas turbine engines and, more particularly, to flow diverters for mid-turbine frame cooling air delivery for use in gas turbine engines.

Gas turbine engines include various sections that are subject to high temperatures, and ensuring cooling thereof is a goal of gas turbine engine systems. One such location requiring cooling is a mid-turbine frame system, located between a high-pressure turbine and the low-pressure turbine. The mid-turbine frame system may include a number of vanes extending between inner and outer diameter platforms. The platforms may require cooling.

For example, it is known to radially impinge cooling air against the outer platforms of a mid-turbine frame system to cool the platforms. The impinging air may be directed from a relatively cool air source, through a conduit, and through one or more apertures radially exterior to the platforms. A problem associated with impinging cooling air against the outer platform is that impingement cooling creates discrete cooling zones around the circumference of the outer platform. As a result, the outer platform will be non-uniformly cooled around its circumference. Such nonuniform cooling may cause the outer platform to be susceptible to thermal distortion. Therefore, there is a need for a stator fairing assembly with an internal structure that promotes uniform cooling within the assembly.

According to a first aspect of the present invention, a gas turbine engine is provided. The gas turbine engine includes a high pressure turbine system, a low pressure turbine system, a mid-turbine frame system arranged axially between the high pressure turbine system and the low pressure turbine system along an engine axis, a cooling air conduit fluidly connected to the mid-turbine frame system, the cooling air conduit configured to supply a cooling air to the mid-turbine frame system through a conduit outlet, and a flow diverter assembly installed between the cooling air conduit and the mid-turbine frame system. The flow diverter assembly includes a mounting plate configured to fixedly mount to the mid-turbine frame system, a manifold arranged on a first side of the mounting plate and defining a manifold cavity therein, a conduit connector extending from a portion of the manifold and configured to fixedly connect to the cooling air conduit, and a diverter body arranged on and extending from a second side of the mounting plate opposite the manifold, the diverter body having a solid base and a plurality of diverter apertures arranged about a circumference of the diverter body. The manifold cavity is fluidly connected to an interior of the diverter body through an aperture formed in the mounting plate.

The gas turbine engine may include that the cooling air conduit is welded to the conduit connector.

The gas turbine engine may include that the diverter body is welded to the mounting plate.

The gas turbine engine may include that the manifold is welded to the mounting plate.

The gas turbine engine may include that the manifold and the mounting plate are a single, machined piece.

The gas turbine engine may include that the mounting plate includes at least one mounting aperture configured to receive a fastener to mount the flow diverter assembly to the mid-turbine frame system.

The gas turbine engine may include that the mid-turbine frame system comprises a frame and the flow diverter assembly is fixedly attached to the frame.

The gas turbine engine may include a scoop configured to aid in directing cooling flow through the aperture of the mounting plate between the manifold cavity and the interior of the diverter body.

The gas turbine engine may include that the mid-turbine frame system comprises a plurality of additional cooling air conduits and respective conduit outlets. The gas turbine engine may further include a plurality of additional flow diverter assemblies, wherein each conduit outlet includes a respective flow diverter assembly installed thereto.

The gas turbine engine may include that the mounting plate is substantially triangular in shape and includes three mounting apertures.

The gas turbine engine may include that the mounting plate is substantially quadrilateral in shape and includes four mounting apertures.

The gas turbine engine may include that the mid-turbine frame system comprises a vane platform, wherein the flow diverter assembly is arranged proximate the vane platform to prevent a cooling air flow from directly impinging upon the vane platform as the cooling air flow passes through the aperture of the mounting plate.

According to a second aspect of the present invention, a flow diverter assembly for installation to a frame system at a conduit outlet of a gas turbine engine is provided. The flow diverter assembly includes a mounting plate configured to fixedly mount to the mid-turbine frame system, a manifold arranged on a first side of the mounting plate and defining a manifold cavity therein, a conduit connector extending from a portion of the manifold and configured to fixedly connect to the cooling air conduit, and a diverter body arranged on and extending from a second side of the mounting plate opposite the manifold, the diverter body having a solid base and a plurality of diverter apertures arranged about a circumference of the diverter body. The manifold cavity is fluidly connected to an interior of the diverter body through an aperture formed in the mounting plate.

The flow diverter assembly may include that the diverter body is welded to the mounting plate.

The flow diverter assembly may include that the manifold is welded to the mounting plate.

The flow diverter assembly may include that the manifold and the mounting plate are a single, machined piece.

The flow diverter assembly may include that the mounting plate includes at least one mounting aperture configured to receive a fastener to mount the flow diverter assembly to a frame system of the gas turbine engine.

The flow diverter assembly may include a scoop configured to aid in directing cooling flow through the aperture of the mounting plate between the manifold cavity and the interior of the diverter body.

The flow diverter assembly may include that the mounting plate is substantially triangular in shape and includes three mounting apertures.

The flow diverter assembly may include that the mounting plate is substantially quadrilateral in shape and includes four mounting apertures.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The subject matter is particularly pointed out and distinctly claimed at the conclusion of the specification. The foregoing and other features, and advantages of the present invention are apparent from the following detailed description taken in conjunction with the accompanying drawings in which:
FIG. 1 is a schematic cross-sectional illustration of a gas turbine engine;
FIG. 2 is a schematic diagram of a portion of a gas turbine engine;
FIG. 3 is a schematic diagram of a portion of a gas turbine engine;
FIG. 4A is a schematic illustration of a flow diverter assembly;
FIG. 4B is a side elevation view of the flow diverter assembly of FIG. 4A;
FIG. 4C is a top-down plan view illustration of the flow diverter assembly of FIG. 4A;
FIG. 4D is a cross-sectional view of the flow diverter assembly of FIG. 4A illustrating an interior structure thereof;
FIG. 4E is a schematic illustration of a portion of the flow diverter assembly of FIG. 4A;
FIG. 4F is a schematic illustration of the flow diverter assembly of FIG. 4A as connected to a cooling conduit;
FIG. 5A is a top-down illustration of a flow diverter assembly;
FIG. 5B is a side elevation illustration of the flow diverter assembly of FIG. 5A;
FIG. 6A is a schematic illustration of a flow diverter assembly being installed to an engine case; and
FIG. 6B is a schematic cross-sectional illustration of the flow diverter assembly of FIG. 6A as attached to the engine case.

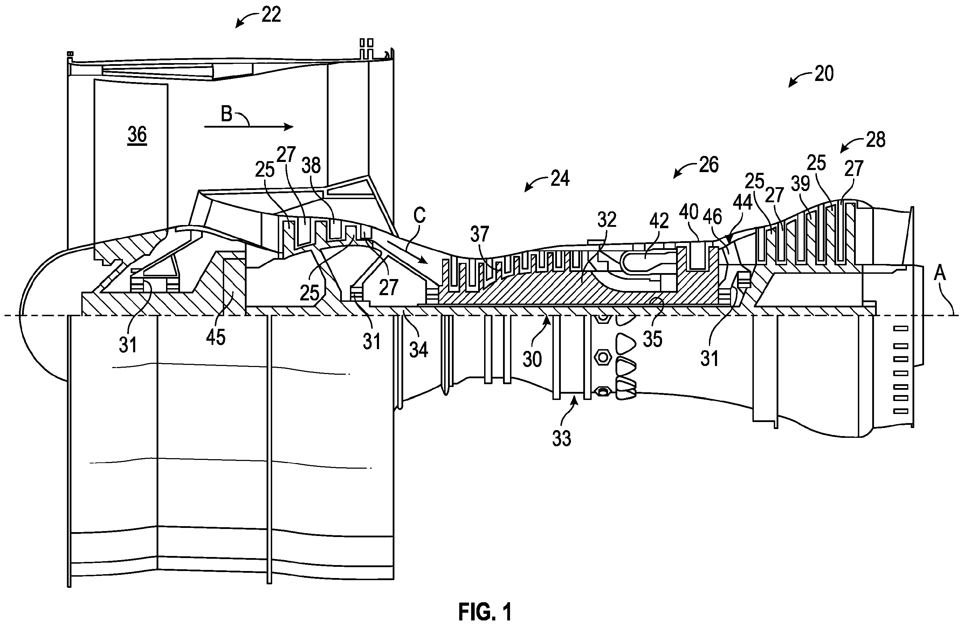

FIG. 1 schematically illustrates a gas turbine engine 20. The exemplary gas turbine engine 20 is a two-spool turbofan engine that generally incorporates a fan section 22, a compressor section 24, a combustor section 26, and a turbine section 28. The fan section 22 drives air along a bypass flow path B, while the compressor section 24 drives air along a core flow path C for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines.

The gas turbine engine 20 generally includes a low-speed spool 30 and a high-speed spool 32 mounted for rotation about an engine centerline longitudinal axis A. The low-speed spool 30 and the high-speed spool 32 may be mounted relative to an engine static structure 33 via several bearing systems 31. It should be understood that other bearing systems 31 may alternatively or additionally be provided.

The low-speed spool 30 generally includes an inner shaft 34 that interconnects a fan 36, a low-pressure compressor 38 and a low-pressure turbine 39. The inner shaft 34 can be connected to the fan 36 through a geared architecture 45 to drive the fan 36 at a lower speed than the low-speed spool 30. The high-speed spool 32 includes an outer shaft 35 that interconnects a high-pressure compressor 37 and a high-pressure turbine 40. In this embodiment, the inner shaft 34 and the outer shaft 35 are supported at various axial locations by bearing systems 31 positioned within the engine static structure 33.

A combustor 42 is arranged between the high-pressure compressor 37 and the high-pressure turbine 40. A mid-turbine frame 44 may be arranged generally between the high-pressure turbine 40 and the low-pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low-pressure compressor 38 and the high-pressure compressor 37, is mixed with fuel and burned in the combustor 42, and is then expanded over the high-pressure turbine 40 and the low-pressure turbine 39. The high-pressure turbine 40 and the low-pressure turbine 39 rotationally drive the respective high-speed spool 32 and the low-speed spool 30 in response to the expansion.

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies add or extract energy from the core airflow that is communicated through the gas turbine engine 20 along the core flow path C. The vanes 27 of the vane assemblies direct the core airflow to the blades 25 to either add or extract energy.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. Example cooling circuits that include features such as airflow bleed ports are discussed below.

Although a specific architecture for a gas turbine engine is depicted in the disclosed non-limiting example, it should be understood that the concepts described herein are not limited to use with the shown and described configuration. For example, the teachings provided herein may be applied to other types of engines. Some such example alternative engines may include, without limitation, turbojets, turboshafts, and other turbofan configurations (e.g., wherein an intermediate spool includes an intermediate pressure compressor ("IPC") between a low-pressure compressor ("LPC") and a high-pressure compressor ("HPC"), and an intermediate pressure turbine ("IPT") between the high-pressure turbine ("HPT") and the low-pressure turbine ("LPT")).

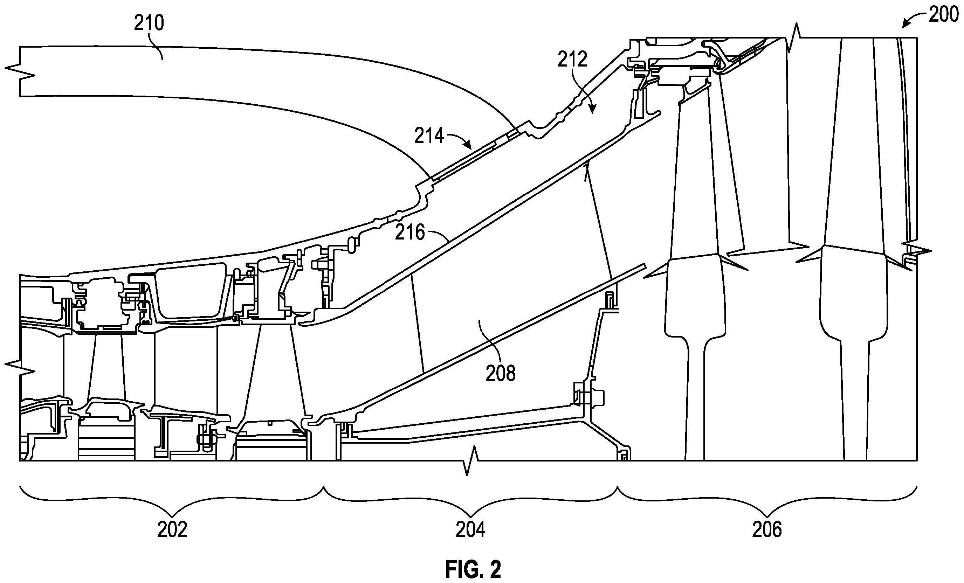

Turning now to FIG. 2, a schematic illustration of a portion of a gas turbine engine 200 is shown. The gas turbine engine 200 includes a high pressure turbine system 202, a mid-turbine frame system 204, and a low pressure turbine system 206. The mid-turbine frame system 204 is arranged axially between the high pressure turbine system 202 and the low pressure turbine system 206 and includes a mid-turbine vane 208. Cooling is supplied to the mid-turbine frame system 204 through a cooling air conduit 210 and supplied into a cold flow impingement region 212 through a conduit outlet 214. The cooling air flowing through the cooling air conduit 210 will impinge upon a vane platform 216 and be dispersed about the mid-turbine frame system 204 and aftward toward the low pressure turbine system 206.

The impinging air will cause the impinged surface to be supplied with relatively cool air which then disperses about the remaining sections, portions, and areas of the vane platform 216. This may result in a relatively high thermal gradient in the material of the vane platform 216. Additionally, the cooling air, as it disperses about the vane platform 216 will have heat pickup. As such, the cooling air will be warmed prior to traveling aftward toward the low pressure turbine system 206, and thus cooling efficiency may not be as high if such heat pickup did not occur.

Further, although flow diverters are known, such flow diverters may have further considerations. For example, some flow diverters are elements that are installed to a case or conduit as a separate element. These installations require additional seals and mounting configurations that can result in failure points and/or areas of leakage. Accordingly, it may be advantageous to have flow diverters that eliminate various drawbacks of other configurations.

Embodiments of the present invention are directed to flow diverters for mid-turbine frame cooling air delivery. Various embodiments may reduce thermal gradients within the material of the mid-turbine frame system. Moreover, various embodiments may enable a cooler air to be delivered to a downstream low pressure turbine assembly. Furthermore, embodiments of the present invention are directed to integrated or integral flow diverter assemblies that eliminate the need for some seals and enables a fixed connection of the flow diverter assembly to a case of an engine or to be mounted to other structures within a gas turbine engine.

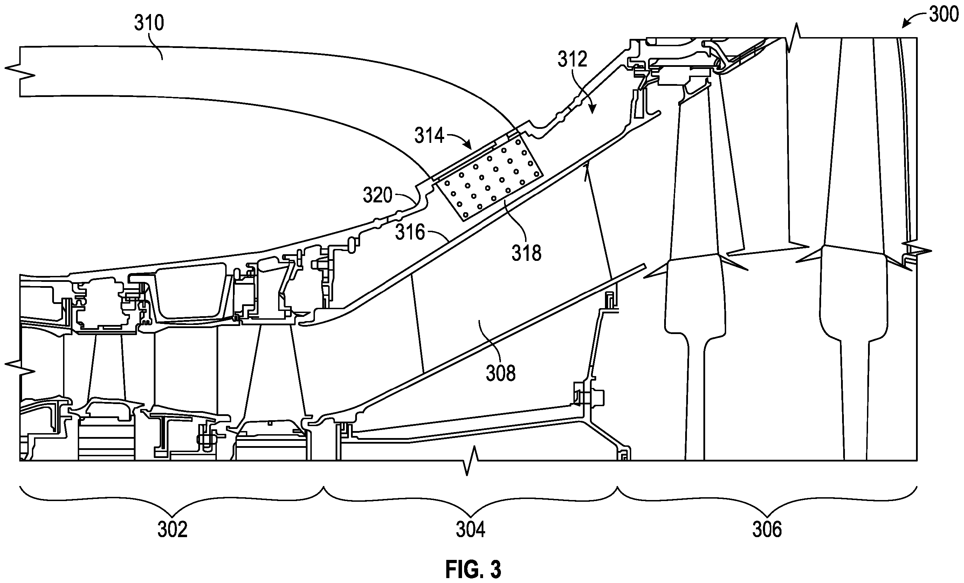

Turning now to FIG. 3, a schematic illustration of a portion of a gas turbine engine 300 is shown. The gas turbine engine 300 includes a high pressure turbine system 302, a mid-turbine frame system 304, and a low pressure turbine system 306. The mid-turbine frame system 304 is arranged axially between the high pressure turbine system 302 and the low pressure turbine system 306 and includes a mid-turbine vane 308. Cooling is supplied to the mid-turbine frame system 304 through a cooling air conduit 310 and supplied into a cold flow impingement region 312 through a conduit outlet 314. The cooling air flowing through the cooling air conduit 310 will impinge upon a vane platform 316 and be dispersed about the mid-turbine frame system 304 and aftward toward the low pressure turbine system 306.

As shown, in accordance with an embodiment of the present invention, a flow diverter 318 is arranged at the conduit outlet 314. The flow diverter 318 may be fixedly connected or removably connected to the conduit outlet 314, to a portion of the cooling air conduit 310, or to a frame 320 of the mid-turbine frame system 304. The flow diverter 318 is arranged and positioned within the cold flow impingement region 312 (e.g., between the vane platform 316 and the frame 320) to prevent direct impingement of a cooling flow upon the vane platform 316 and to direct a cooling airflow in an omnidirectional manner (e.g., 360° normal to a flow direction as the cooling air flows through the conduit outlet 314). Advantageously, such flow diverter can reduce or lessen a thermal gradient experienced by sections of the mid-turbine frame system 304 and also increase a cooling of sections of the gas turbine engine 300 that are downstream or aft of the mid-turbine frame system 304 (e.g., the low pressure turbine system 306).

As shown, the flow diverter 318 includes a plurality of apertures or flow holes arranged about a circumference of a cylindrical body. The base of the cylindrical body may be solid and prevent air flow from impinging directly onto the vane platform 316. The apertures/flow holes permit the flow from exiting the flow diverter 318 in all directions, thereby providing a more uniform cooling within the cold flow impingement region 312 and preventing a large cold spot and high thermal gradients in and around the vane platform 316.

Although FIG. 3 illustrates a single flow diverter 318 installed at a single conduit outlet 314, this is because such illustration is a cross-sectional view. It will be appreciated by those of skill in the art that one or more conduit outlets may be arranged circumferentially about a mid-turbine frame system to enable multiple locations of cooling flow to be directed to the mid-turbine frame system. For example, four or eight equally spaced conduit outlets may be arranged around a circumferentially shaped mid-turbine frame system, with each conduit outlet having a respective flow diverter installed thereto. The specific number of conduit outlets and respective flow diverters is not to be limiting, and any number of flow diverters may be installed within a gas turbine engine, depending on the system architecture, cooling requirements, and other considerations, as will be appreciated by those of skill in the art.

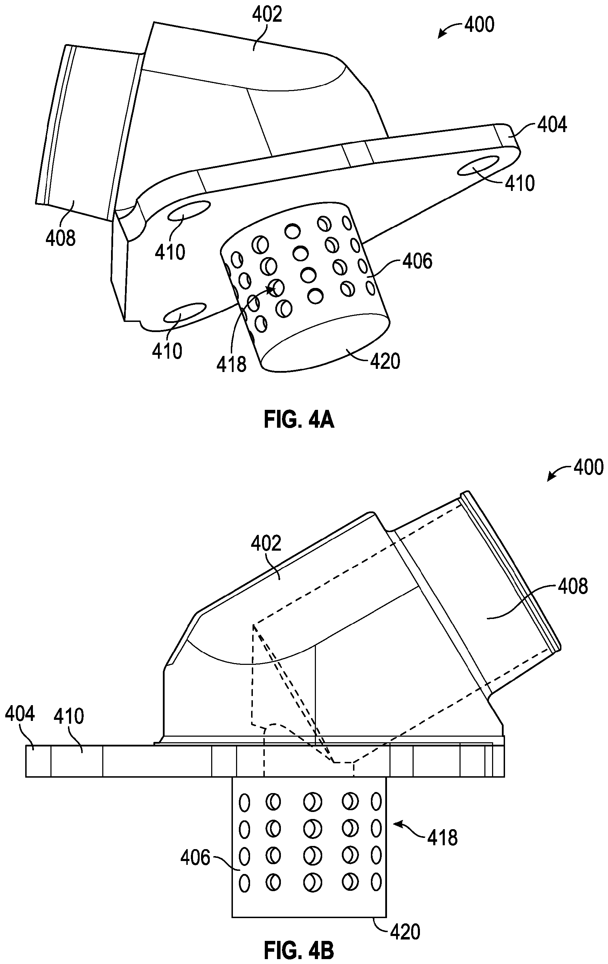

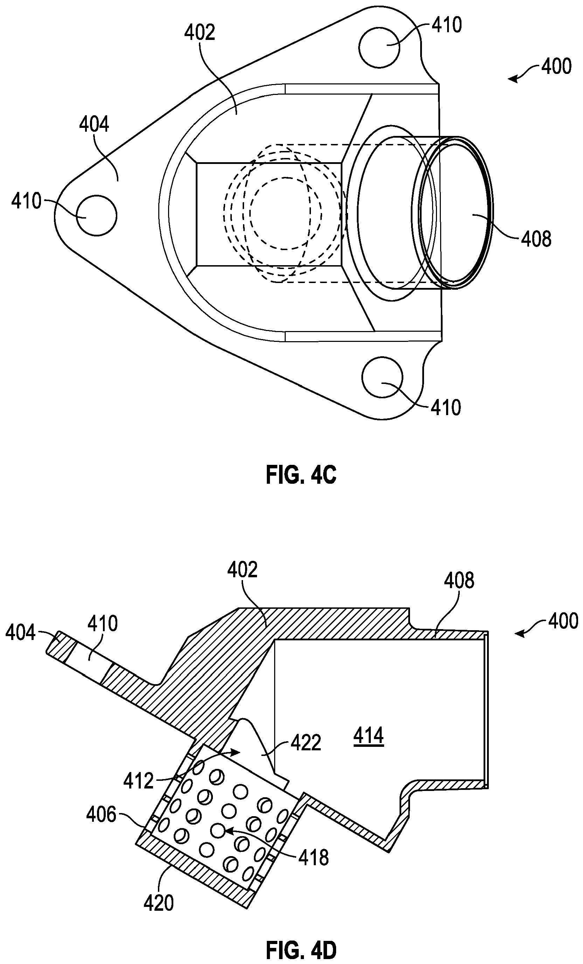

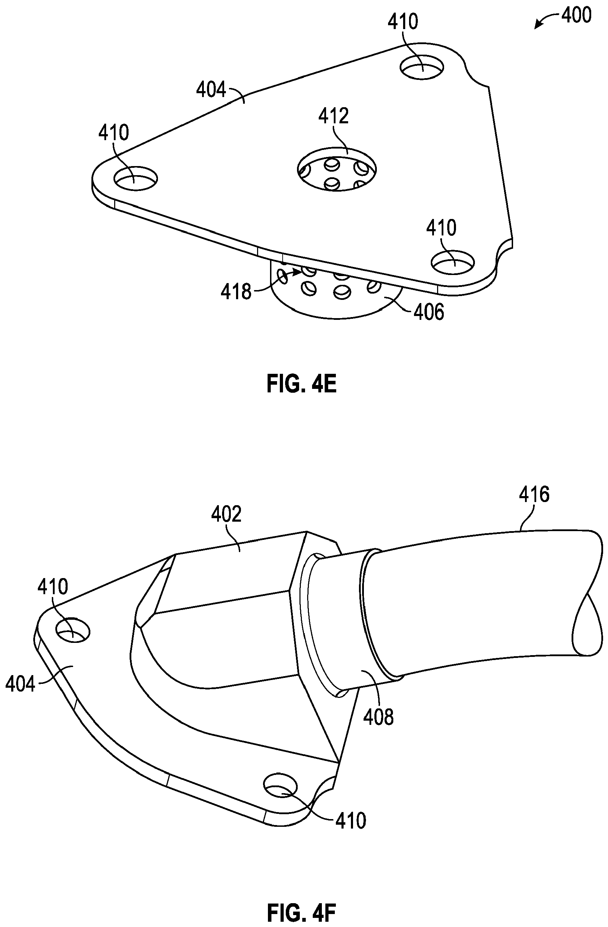

Turning now to FIGS. 4A-4F, schematic illustrations of a flow diverter assembly 400 in accordance with an embodiment of the present invention is shown. The flow diverter assembly 400 of the present invention is an assembly of various structures that form a unique flow diverter solution. For example, as shown in FIGS. 4A-4F, the flow diverter assembly 400 includes a manifold 402, a mounting plate 404, a diverter body 406, and a conduit connector 408. The manifold 402, the mounting plate 404, the diverter body 406, and the conduit connector 408 may be a uniform and single component that is manufactured such that these structures are fixedly and non-removably connected. That is, in accordance with some embodiments, the flow diverter assembly 400 may be manufactured as a single structure, such as by casting, machining, or additive manufacturing.

However, in other embodiments, one or more of the individual components (i.e., the manifold 402, the mounting plate 404, the diverter body 406, and the conduit connector 408) may be manufactured separately (e.g., by casting, molding, machining, additive manufacturing, etc.) and then assembled into a uniform or unitary structure, such as by welding, brazing, and the like. As such, the flow diverter assembly 400 of the present invention provides for a unitary connection between a cooling flow conduit and the diverter body 406, thus eliminating some previously required seals between components at this this connection.

The flow diverter assembly 400 is configured to directly mount or attach to a case my means of the mounting plate 404. As shown, the mounting plate 404 includes one or more mounting apertures 410 that are configured to receive fasteners or the like to directly attach the mounting plate 404, and thus the entire flow diverter assembly 400, to an engine case or the like. The fasteners may be bolts, screws, rivets, or the like, as will be appreciated by those of skill in the art.

The manifold 402 is mounted, attached, or formed on a first side of the mounting plate 404 and the diverter body 406 is mounted, attached, or formed on a second (opposite) side of the mounting plate 404. The mounting plate 404 includes an aperture 412 that provides for fluid connection between a manifold cavity 414 and an interior of the diverter body 406. The manifold 402 includes the conduit connector 408 that is configured to connect to or otherwise attach with a cooling conduit 416 or duct (shown in FIG. 4F). In accordance with some embodiments, the connection between the cooling conduit 416 and the conduit connector 408 may be by welding, brazing, or the like.

The diverter body 406 includes a plurality of diverter apertures 418 that are arranged to direct a cooling flow in a direction normal to a flow direction as a cooling flow enters the diverter body 406 through the aperture 412 of the mounting plate 404 from the manifold cavity 414. To aid in this controlled direction of flow, the diverter body 406 includes a base 420 that is solid and prevents cooling air flow from directly passing through the diverter body 406 in the same direction the flow takes when entering the diverter body 406. In some embodiments, and as shown in FIG. 4D, the connection between the manifold 402 and the diverter body 406 can include a scoop 422 that is configured to aid in directing cooling flow through the aperture 412 of the mounting plate 404 between the manifold 402 and the diverter body 406.

In the configuration of the flow diverter assembly 400 shown in FIGS. 4A-4F, the mounting plate 404 has a generally triangular shape/geometry. As such, the flow diverter assembly 400 includes three (3) mounting apertures 410. However, such geometry and shape of the mounting plate and the number of mounting apertures is not to be so limited in accordance with embodiments of the present invention.

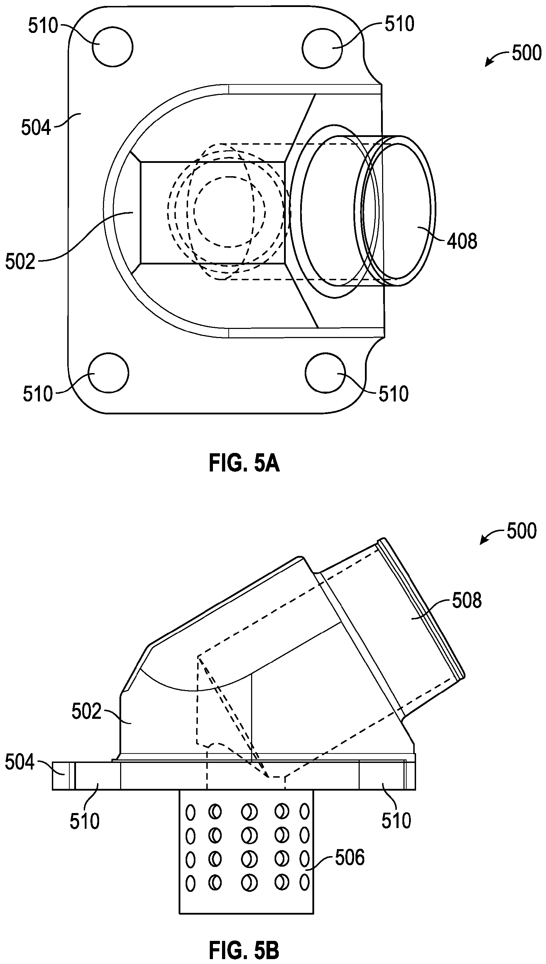

For example, turning to FIGS. 5A-5B, schematic illustrations of a flow diverter assembly 500 in accordance with an embodiment of the present invention are shown. The flow diverter assembly 500 of FIG. 5 is similar to that shown and described above, having a manifold 502, a mounting plate 504, a diverter body 506, and a conduit connector 508. However, as illustrated, the flow diverter assembly 500 of this embodiment includes a rectangular mounting plate 504 having four (4) mounting apertures 510.

The different geometric profile of the mounting plate and the number of mounting apertures may be selected to accommodate installation of flow diverter assemblies disclosed herein to be installed in different engine locations and/or configurations. That is, the mounting plate of the flow diverter assemblies of the present invention may be selected for a particular installation configuration, without departing from the scope of the present invention. Although shown herein with a triangular mounting plate and a rectangular mounting plate, other geometric shapes, such as square, quadrilateral, polygonal, or rounded may be employed without departing from the scope of the present invention.

Advantageously, embodiments of the present invention provide for a direct connection between the structure of a cooling conduit (e.g., conduit 416 shown in FIG. 4F) and a diverter body (e.g., diverter body 406). With the unitary structure of the flow diverter assemblies disclosed herein, the flow path is substantially consistent, without multiple connections, joints, and seams between the cooling conduit and the diverter arranged within the plenum around the vane assemblies of a gas turbine engine. Such unitary construction, including the manifold, eliminate the need for additional seals at connections between the various components of the cooling system.

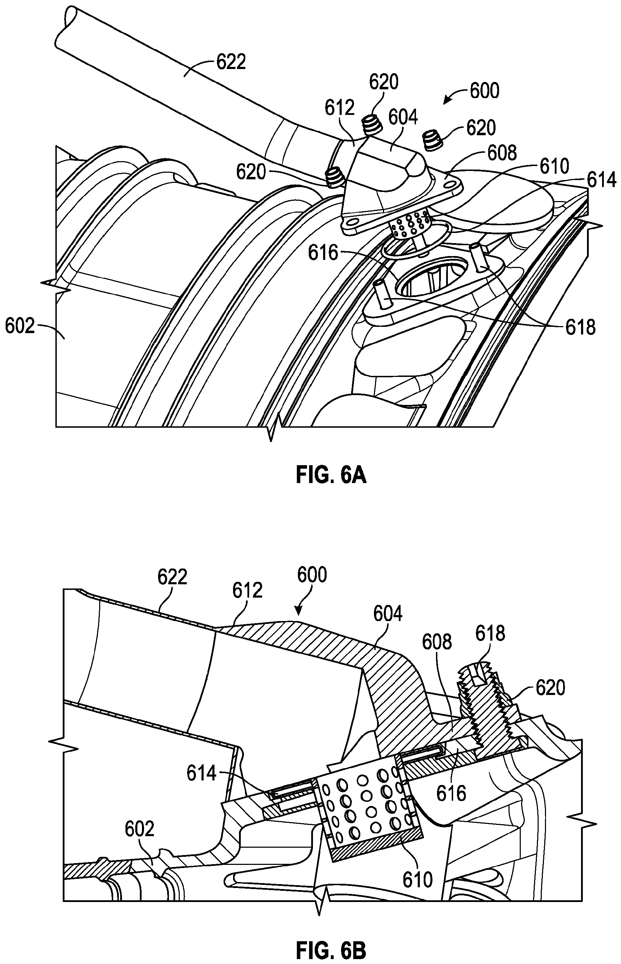

Turning now to FIGS. 6A-6B, schematic illustrations of a flow diverter assembly 600 in accordance with an embodiment of the present invention as installed to an engine case 602 of a mid-turbine frame system are shown. FIG. 6A illustrates the installation of the flow diverter assembly 600 and FIG. 6B is a cross-sectional view of the flow diverter assembly 600 as attached to the engine case 602. The flow diverter assembly 600 is similar to that shown and described above, including a manifold 604, a mounting plate 608, a diverter body 610, and a conduit connector 612.

As shown in FIG. 6A, a single seal 614 may be used to seal between the mounting plate 608 and a portion 616 of the engine case 602 (e.g., a mounting fixture or structure). The seal 614 may be a c-seal, O-ring, or the like, that provides for a sealing engagement between the mounting plate 608 and the portion 616 of the engine case 602. A seal between the diverter body 610 and the mounting plate 608 is omitted and unnecessary because of the unitary body structure of the flow diverter assembly 600.

As shown, the mounting plate 608 is affixed to the engine case 602 by one or more threaded fasteners 618 and nuts 620. Although a bolt and nut configuration is illustratively shown, those of skill in the art will appreciate that the fastening mechanism may include rivets, adhesives, welding, bonding, or other types of mechanical and/or chemical attachment means, without departing from the scope of the present invention. Also shown in FIGS. 6A-6B is a conduit 622 which is configured to supply cooling air through the conduit 622, into and through the flow diverter assembly 600, and into an interior region of the engine case 602 (e.g., proximate a platform of a vane assembly).

As shown, the unitary structure of the flow diverter assembly 600 enables a relatively simple installation process with fewer failure points than in prior configurations. For example, by having a unitary flow diverter assembly, the elimination of seals where the flow diverter is installed can be eliminated. Furthermore, because the flow diverter body is part of the flow diverter assembly, the number of attachments and engagements between components can be reduced.

Advantageously, embodiments described herein enable improved cooling within a gas turbine engine as compared to systems without flow diverters or as compared to system with other types of flow diverters. In accordance with some flow diverter assemblies described herein, a thermal gradient of the material of a mid-turbine frame system may lessened as compared to a direct impingement system or a directed flow-flow diverter. Furthermore, advantageously, embodiments of the present invention reduce or eliminate the need for the use of certain seals and connectors as employed by prior

As used herein, the terms "about" and "substantially" are intended to include the degree of error associated with measurement of the particular quantity based upon the equipment available at the time of filing the application. For example, the terms may include a range of ± 8%, or 5%, or 2% of a given value or other percentage change as will be appreciated by those of skill in the art for the particular measurement and/or dimensions referred to herein.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It should be appreciated that relative positional terms such as "forward," "aft," "upper," "lower," "above," "below," "radial," "axial," "circumferential," and the like are with reference to normal operational attitude and should not be considered otherwise limiting.

While the present invention has been described in detail in connection with only a limited number of embodiments, it should be readily understood that the present invention is not limited to such disclosed embodiments. Rather, the present invention can be modified to incorporate any number of variations, alterations, substitutions, combinations, sub-combinations, or equivalent arrangements not heretofore described, but which are commensurate with the scope of the present invention, as defined in the appended claims. Additionally, while various embodiments of the present invention have been described, it is to be understood that aspects of the present invention may include only some of the described embodiments.

Accordingly, the present invention is not to be seen as limited by the foregoing description but is only limited by the scope of the appended claims.

## Claims

1. A flow diverter assembly (400; 500; 600) for installation to a frame system (304) at a conduit outlet (314) of a gas turbine engine (300), the flow diverter assembly (400; 500; 600) comprising:
a mounting plate (404; 504; 608) configured to fixedly mount to the mid-turbine frame system (304);
a manifold (402; 502; 604) arranged on a first side of the mounting plate (404; 504; 608) and defining a manifold cavity (414) therein;
a conduit connector (408; 508; 612) extending from a portion of the manifold (402; 502; 604) and configured to fixedly connect to the cooling air conduit (310); and
a diverter body (406; 506; 610) arranged on and extending from a second side of the mounting plate (404; 504; 608) opposite the manifold (402; 502; 604), the diverter body (406; 506; 610) having a solid base and a plurality of diverter apertures (418) arranged about a circumference of the diverter body (406; 506),
wherein the manifold cavity (414) is fluidly connected to an interior of the diverter body (406; 506; 610) through an aperture (412) formed in the mounting plate (404; 504; 608).

2. The flow diverter assembly (400; 500; 600) of claim 1, wherein the diverter body (406; 506; 610) is welded to the mounting plate (404; 504; 608).

3. The flow diverter assembly (400; 500; 600) of claim 1 or 2, wherein the manifold (402; 502; 604) is welded to the mounting plate (404; 504; 604).

4. The flow diverter assembly (400; 500; 600) of claim 1 or 2, wherein the manifold (402; 502; 604) and the mounting plate (404; 504; 608) are a single, machined piece.

5. The flow diverter assembly (400; 500; 600) of any preceding claim, wherein the mounting plate (404; 504; 608) includes at least one mounting aperture (410; 510) configured to receive a fastener (618) to mount the flow diverter assembly (400; 500; 600) to a frame system (304) of the gas turbine engine (300).

6. The flow diverter assembly (400; 500; 600) of any preceding claim, further comprising a scoop (422) configured to aid in directing cooling flow through the aperture (412) of the mounting plate (404; 504; 608) between the manifold cavity (414) and the interior of the diverter body (406; 506; 610).

7. The flow diverter assembly (400; 600) of any preceding claim, wherein the mounting plate (404; 608) is substantially triangular in shape and includes three mounting apertures (410).

8. The flow diverter assembly (500) of any of claims 1-6, wherein the mounting plate (504) is substantially quadrilateral in shape and includes four mounting apertures (510).

9. A gas turbine engine (300) comprising:
a high pressure turbine system (302);
a low pressure turbine system (306);
a mid-turbine frame system (304) arranged axially between the high pressure turbine system (302) and the low pressure turbine system (306) along an engine axis;
a cooling air conduit (310) fluidly connected to the mid-turbine frame system (304), the cooling air conduit (310) configured to supply a cooling air to the mid-turbine frame system (304) through a conduit outlet (314); and
a flow diverter assembly (400; 500; 600) of any of the preceding claims installed between the cooling air conduit (310) and the mid-turbine frame system (304).

10. The gas turbine engine (300) of claim 9, wherein the cooling air conduit (310) is welded to the conduit connector (408; 508; 612).

11. The gas turbine engine (300) of claim 9 or 10, wherein the mid-turbine frame system (304) comprises a frame (320) and the flow diverter assembly (400; 500; 600) is fixedly attached to the frame (320).

12. The gas turbine engine (300) of claim 9, 10 or 11, wherein the mid-turbine frame system (304) comprises a plurality of additional cooling air conduits (310) and respective conduit outlets (314), the gas turbine engine (300) further comprising:
a plurality of additional flow diverter assemblies (400; 500; 600), wherein each conduit outlet includes (314) a respective flow diverter assembly (400; 500; 600) installed thereto.

13. The gas turbine engine (300) of any of claims 9 to 12, wherein the mid-turbine frame system (304) comprises a vane platform (316), wherein the flow diverter assembly (400; 500; 600) is arranged proximate the vane platform (316) to prevent a cooling air flow from directly impinging upon the vane platform (316) as the cooling air flow passes through the aperture (412) of the mounting plate (404; 504; 608).
